# FASCICULE DE BREVET EUROPEEN

(11) **EP 3 473 813 B1**
(45) Date de publication et mention de la délivrance du brevet: **24.05.2023**
(21) Numéro de dépôt: 18201880.4
(22) Date de dépôt: 22.10.2018
(51) Int. Cl.: F01D 9/04

(54) **TURBOMACHINE COMPRENANT UN ENSEMBLE DE REDRESSEMENT**
TURBOTRIEBWERK, DAS EINE GLEICHAUSRICHTUNGSANORDNUNG UMFASST
TURBINE ENGINE WITH A RECTIFIER UNIT

(30) Priorité: 23.10.2017 FR 1759977
(43) Date de publication de la demande: 24.04.2019
(73) Titulaire: SAFRAN AIRCRAFT ENGINES, 75015 Paris (FR)
(72) Inventeur: ZACCARDI, Cédric, 77550 MOISSY-CRAMAYEL (FR); ORIEUX, Kaëlig Merwen, 77550 MOISSY-CRAMAYEL (FR); RIERA, William Henri Joseph, 77550 MOISSY-CRAMAYEL (FR)
(74) Mandataire: Ernest Gutmann - Yves Plasseraud S.A.S.

(56) Documents cités:
- EP-A2- 2 412 931
- WO-A1-2017/187093
- US-A1- 2009 317 246
- US-A1- 2010 111 685

## Description

### DOMAINE

La présente invention concerne un étage de redressement d'un flux d'air pour une turbomachine, et plus particulièrement un ensemble de redressement de flux d'air positionné en aval d'une soufflante, dans un flux secondaire.

### CONTEXTE

Une turbomachine à double flux comprend une soufflante dont le flux en sortie se divise en un flux primaire, dirigé vers les compresseurs, la chambre de combustion puis les turbines de la turbomachine, et un flux secondaire fournissant une part essentielle de la poussée.

Afin de limiter les pertes aérodynamiques et donc améliorer la poussée, il est nécessaire de redresser le flux secondaire de manière à ce qu'il s'écoule, autant que possible dans une direction axiale.

Les turbomachines comprennent, pour ce faire, des ensembles de redressement comprenant des aubes fixes communément appelées OGV (acronyme de l'anglais Outlet Guide Vane) ayant un bord d'attaque et un bord de fuite entre lesquels s'étendent une face d'intrados et une face d'extrados permettant de redresser le flux d'air.

Dans l'optique de réduire la masse d'une turbomachine certaines pièces, habituellement métalliques, sont peu à peu remplacées par des pièces en matériaux composites. C'est notamment le cas des étages de redressement qui peuvent être réalisés en matériaux composites, étant donné qu'ils sont placés dans les parties froides de la turbomachine, c'est-à-dire en amont de la chambre de combustion, et ne sont donc pas soumis à de fortes chaleurs.

La demande de brevet WO 2014/076408, au nom de la demanderesse, divulgue, comme représenté sur la figure 1, un ensemble 10 de redressement d'un flux d'air d'une turbomachine, comprenant deux viroles 12, 14 coaxiales respectivement radialement interne et externe entre lesquelles s'étendent des aubes 16 de stator fixées à une première portion d'extrémité 18 sur la virole 12 radialement interne et à une seconde portion d'extrémité 20 sur la virole 14 radialement externe. Les aubes 16 peuvent être réalisées en matériau composite et comprennent une partie 22 utile s'étendant entre les deux portions d'extrémité 18, 20 et définissant une face intrados 21 et une face extrados 23 pour redresser le flux d'air.

Si un tel ensemble permet d'alléger la turbomachine, il reste toutefois perfectible. Le document US2010/111685 décrit une turbomachine à double flux comprenant une roue de soufflante agencée autour d'une portion annulaire intercalée axialement entre un compresseur basse pression et un compresseur haute pression. Dans le document WO-2017/187093 un ensemble de redressement est positionné axialement en aval de la roue de soufflante.

Premièrement, pour gagner en masse, la section des aubes pourrait être d'avantage réduite, toutefois les efforts auxquels sont soumises les aubes en fonctionnement ne permettent pas actuellement de réduire la [009] section des aubes sans engendrer un risque accru de déliaison des couches de fibres constitutives des aubes.

Deuxièmement, l'efficacité de l'ensemble de redressement de l'art antérieur n'est pas optimale. En effet, on a pu constater la formation de tourbillons au voisinage de l'extrados des aubes, au niveau de la fixation [010] des aubes avec la virole radialement interne, ces tourbillons générant alors une turbulence dans le flux d'air en sortie de l'ensemble de redressement qui réduit le rendement propulsif de la turbomachine.

En outre, en fonctionnement, l'ensemble de redressement est soumis à un effort de torsion autour de son axe qui est appliqué sur la virole interne ou la virole externe, ce qui tend à faire tourner la virole interne relativement à la virole externe. Aussi une simple réduction de la masse des aubes, et plus particulièrement de leur section, ne saurait permettre d'accroître leur résistance mécanique.

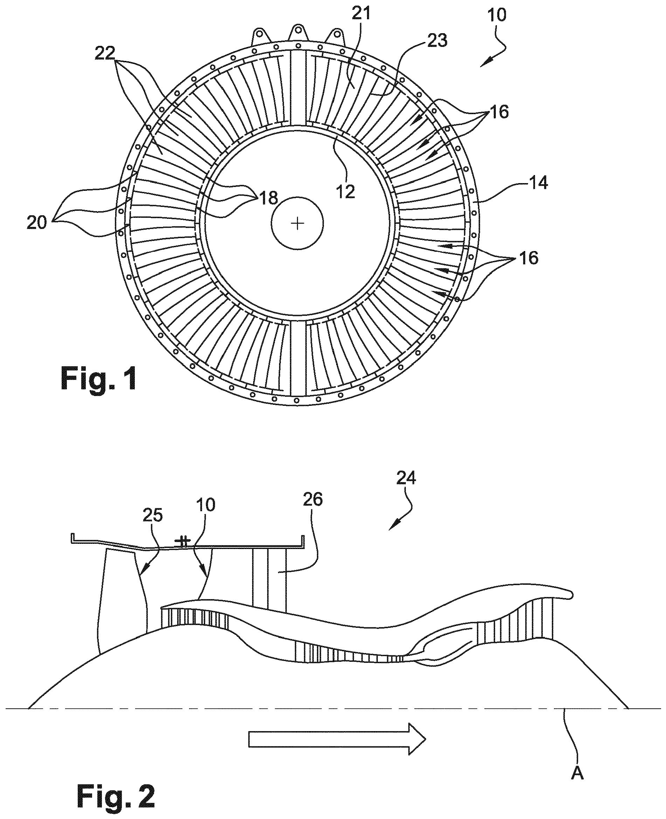

La figure 2 représente une demi-coupe simplifiée d'une turbomachine 24 comprenant d'amont en aval une roue de soufflante 25, un ensemble de redressement 10 et des bras structurants 26 permettant le passage de servitudes tels que des câbles ou tuyaux par exemple.

Par ailleurs, les bras structurants 26 permettent d'assurer la rigidité de la turbomachine 24 et la reprise d'efforts relative à la liaison avec l'avion.

De tels bras structurants 26 augmentent la masse de la turbomachine 24 et peuvent perturber l'écoulement d'air en sortie de l'ensemble de redressement 10.

Si l'augmentation de l'angle d'inclinaison peut apparaitre souhaitable pour réduire les tourbillons d'air au niveau de la virole radialement interne, cela s'avère toutefois préjudiciable à la tenue mécanique de l'ensemble lorsque l'ensemble doit assurer une fonction structurante, par exemple la reprise d'efforts relative à la liaison avec l'avion.

L'invention a notamment pour but d'apporter une solution simple, efficace et économique à ces problèmes.

### RESUME DE L'INVENTION

A cet effet, le présent document concerne une turbomachine à double flux comprenant une roue de soufflante agencée à l'extrémité amont de la turbomachine et un ensemble de redressement positionné axialement en aval de la roue de soufflante, ledit ensemble comprenant deux viroles coaxiales radialement interne et externe entre lesquelles s'étendent des aubes en matériau composite, la virole radialement interne entourant un compresseur et délimitant avec la virole radialement externe une veine annulaire d'écoulement d'un flux d'air secondaire, les aubes étant fixées à une première portion d'extrémité à la virole radialement interne et à une seconde portion d'extrémité à la virole radialement externe, les aubes comprenant en outre une partie utile s'étendant entre lesdites première et seconde portions d'extrémité, dans laquelle :
a) pour chaque aube, dans un plan perpendiculaire à l'axe des viroles radialement interne et externe, une droite passant par une jonction entre lesdites première et seconde portions d'extrémité et la partie utile forme avec un rayon de la virole radialement interne passant par la jonction entre ladite première portion d'extrémité et la partie utile de ladite aube un angle α tel que 0°<α≤30°,
b) la différence de rayon entre la virole interne et la virole externe peut être comprise entre 200 et 900 mm, la virole radialement interne comprenant, sur sa périphérie radialement externe, des décrochés formant des parois s'étendant radialement et contre lesquelles la première portion d'extrémité des aubes vient s'appuyer,
c) le nombre d'aubes peut être compris entre 25 et 45.

La virole radialement interne comprend ainsi, sur sa périphérie radialement externe, les décrochés aptes à recevoir la première portion d'extrémité des aubes.

Un telle turbomachine comprenant les caractéristiques des points a), b), et c) précités offre un bon compromis entre nombre d'aubes utiles pour un redressement efficace de l'air et un allègement de la turbomachine. En outre, l'inclinaison des aubes par rapport au rayon de la virole permet de réduire la création de tourbillons en pied d'aube.

La virole radialement interne peut présenter un diamètre compris entre 1000 mm et 1600 mm.

L'angle α peut être compris entre 10 et 30. Le diamètre de la virole interne peut être compris entre 1000 et 1200. Le nombre d'aubes peut être compris entre 30 et 40.

Le diamètre de la virole radialement interne peut être de 1000 mm, l'angle α peut de 10° et l'ensemble peut comprendre 45 aubes.

Le diamètre de la virole radialement interne peut être de 1100 mm, l'angle α peut être de 30° et l'ensemble peut comprendre 30 aubes.

Le diamètre de la virole radialement interne peut être de 1200 mm, l'angle α peut être de 20° et l'ensemble peut comprendre 36 aubes.

La veine secondaire peut être dépourvue de bras structurant en amont de l'ensemble de redressement.

Dans ce cas de figure, ce sont les aubes qui assurent la fonction structurante, c'est-à-dire de reprise d'efforts et, le cas échéant, de servitude pour le passage de câbles ou de tuyaux par exemple. Les combinaisons de l'angle α et du nombre d'aubes précédemment évoquées permettent notamment que l'ensemble réponde à la fonction structurante.

En outre, le fait que l'ensemble de redressement assure la fonction structurante permet d'alléger encore la masse de la turbomachine.

Au moins l'une parmi la première portion d'extrémité ou la seconde portion d'extrémité peut être recourbée dans un premier sens en direction circonférentielle par rapport à la partie utile de l'aube.

Ledit premier sens circonférentiel peut être orienté vers une face extrados d'une aube adjacente.

La première portion d'extrémité ou la seconde portion d'extrémité peut être recourbée dans un premier sens en direction circonférentielle par rapport à la partie utile de l'aube, et l'autre de la seconde portion d'extrémité ou de la première portion d'extrémité peut être recourbée dans un second sens opposé au premier sens.

La seconde portion d'extrémité peut comprendre une première bande de liaison à la virole radialement externe recourbée dans le premier sens en direction circonférentielle par rapport à la partie utile de l'aube et une seconde bande de liaison à la virole radialement externe recourbée dans un second sens circonférentiel opposé au premier sens circonférentiel.

De telles configuration des portions d'extrémité permettent notamment que les aubes en composite travaillent soit en compression, soit en traction, ce qui permet d'accroître la durée de vie des aubes.

La première portion d'extrémité peut être sensiblement rectiligne et s'étendre sensiblement dans le prolongement de la partie utile de l'aube.

En combinaison avec des aubes dont la première portion d'extrémité est sensiblement rectiligne et sensiblement dans le prolongement de la partie utile, les décrochés permettent une fixation simple, rapide et aisée des aubes sur la virole radialement interne.

La virole radialement interne peu comprendre un nombre de décrochés identique au nombre d'aubes de l'ensemble.

Par ailleurs, les aubes peuvent définir une face intrados et une face extrados.

De plus, chacune de la première portion d'extrémité et de la seconde portion d'extrémité peut comprendre une première bande de liaison à la virole radialement externe recourbée dans le premier sens en direction circonférentielle par rapport à la partie utile de l'aube et une seconde bande de liaison à la virole radialement externe recourbée dans un second sens circonférentiel opposé au premier sens circonférentiel.

### BREVE DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique de face d'un ensemble de redressement de l'art antérieur ;
- la figure 2 est une demi-coupe simplifiée d'une turbomachine comprenant un ensemble de redressement selon l'art antérieur ;
- la figure 3 est une demi-coupe simplifiée d'une turbomachine comprenant un ensemble de redressement selon l'invention ;
- la figure 4 est une vue de face simplifiée de l'ensemble de redressement selon une première forme de réalisation de l'invention ;
- la figure 5 est une vue de face simplifiée de l'ensemble de redressement selon une deuxième forme de réalisation de l'invention ;
- la figure 6 est une vue de face simplifiée de l'ensemble de redressement selon une troisième forme de réalisation de l'invention ;
- la figure 7 est une vue schématique montrant la fixation de la turbomachine selon une première forme de réalisation ;
- la figure 8 est une vue schématique montrant la fixation de la turbomachine selon une deuxième forme de réalisation ;
- la figure 9 est une vue schématique montrant la fixation d'une aube selon une première forme de réalisation ;
- la figure 10 est une vue schématique montrant la fixation d'une aube selon une deuxième forme de réalisation ;
- la figure 11 est une vue schématique montrant la fixation d'une aube selon une troisième forme de réalisation.

### DESCRIPTION DETAILLEE

Dans la suite de la description, les éléments identiques de l'art antérieur et de l'invention sont désignés à l'aide des mêmes références numériques.

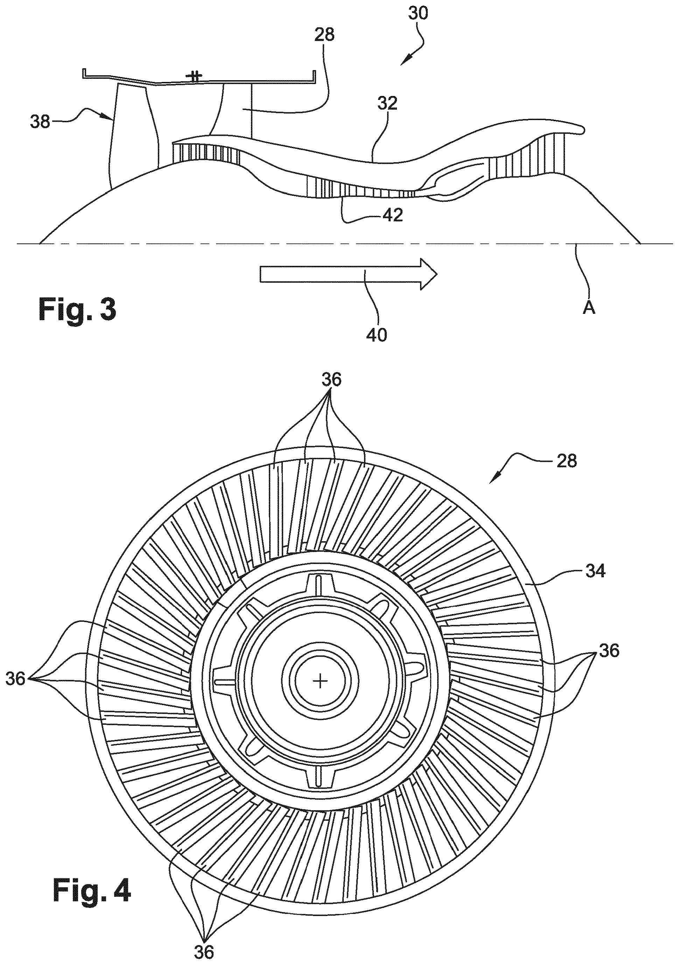

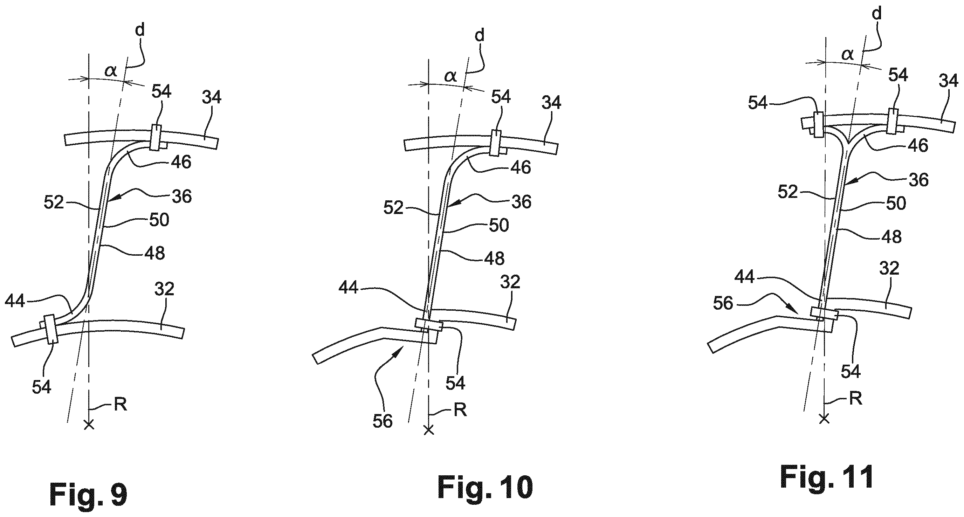

Les figures 3 à 11 illustrent plusieurs formes de réalisation d'un ensemble de redressement 28. En particulier, les figures 10 et 11 illustrent deux formes de réalisation de l'invention.

On a représenté, de manière schématique, sur la figure 3, une demi-coupe d'une turbomachine 30 comprenant l'ensemble de redressement 28.
On note qu'en aval de l'ensemble de redressement 28, la turbomachine 30 est dépourvue de bras structurants. En effet, c'est l'ensemble de redressement 28 qui assure, ici, la fonction structurante des bras structurants de la turbomachine de l'art antérieur.

Cet ensemble 28 comprend deux viroles coaxiales radialement interne 32 et externe 34, respectivement, entre lesquelles s'étendent des aubes 36. Avantageusement, les aubes 36 sont réalisées en matériau composite de sorte à réduire la masse de l'ensemble de redressement 28.

De préférence, la virole externe 34 a un diamètre compris entre 1000 et 1600 mm.

De préférence également, le nombre d'aubes 36 est compris entre vingt-cinq et quarante-cinq.

Comme on le voit sur la figure 3, l'ensemble de redressement 28 est positionné en aval d'une roue de soufflante 38, la flèche 40 représentant le sens de circulation de l'air dans la turbomachine 30, et la virole radialement interne 32 entoure le compresseur basse pression 42.

Les aubes 36 de l'ensemble de redressement 28 sont fixées à une première portion d'extrémité 44 à la virole radialement interne 32 et à une seconde portion d'extrémité 46 à la virole radialement externe 34, et comprennent une partie utile 48 qui s'étend entre les deux portions d'extrémité 44, 46 et définit une face intrados 50 et une face extrados 52 servant à redresser le flux secondaire de sorte que le flux secondaire s'écoule de manière sensiblement laminaire en aval de l'ensemble de redressement 28.

Sur les aubes 36, la face intrados 50 est orientée vers la virole radialement interne 32 et la face extrados 52 est orientée vers la virole radialement externe 34.

Les figures 4 à 6 représentent un ensemble de redressement 28 selon une première, une deuxième et une troisième forme de réalisation respectivement.

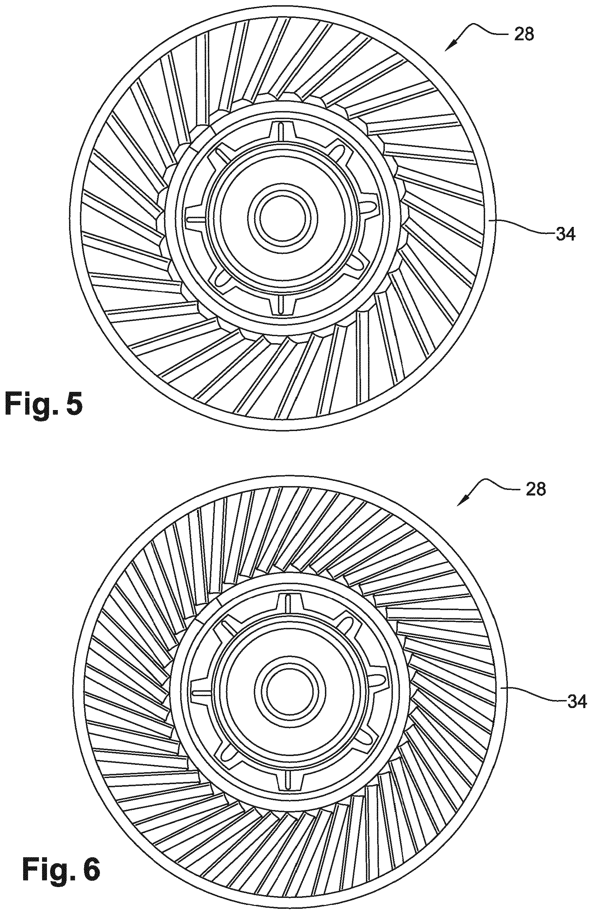

Dans les premières et deuxièmes formes de réalisation, illustrées aux figures 4 et 5, l'ensemble comprend quarante-cinq aubes 36 en composite.

Dans la troisième forme de réalisation, illustrée à la figure 6, l'ensemble comprend trente aubes 36 en composite.

Les aubes 36 en composites offrent notamment une meilleure résistance aux sollicitations en traction et en compression que les aubes métalliques généralement utilisées dans les ensembles de l'art antérieur.

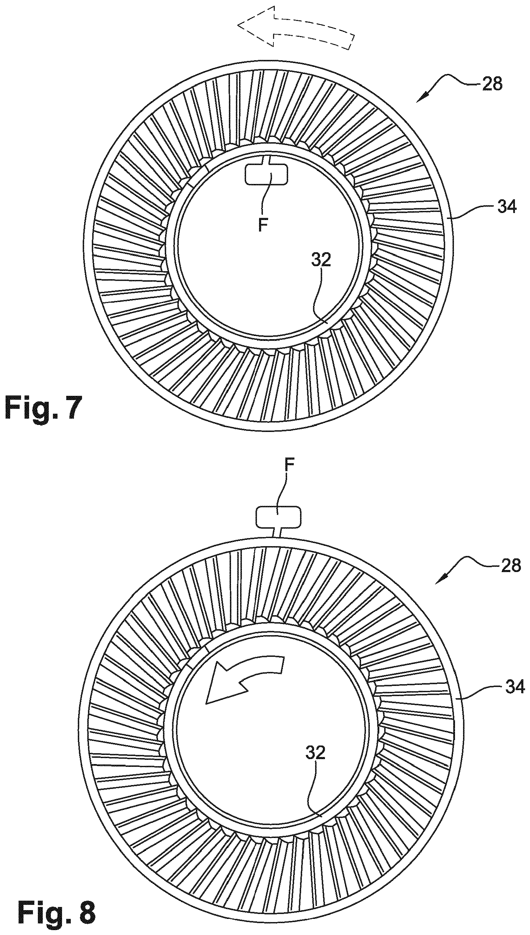

Les figures 7 et 8 représentent deux types de fixation F de la turbomachine 30 à un avion, les fixations F étant représentées schématiquement sur les figures.

Dans le premier type représenté sur la figure 7, la turbomachine est fixée à l'avion par sa virole radialement interne. Aussi, en fonctionnement, la rotation de la roue de soufflante 28 imprime, comme cela est représenté par la flèche en pointillés de la figure 7, une contrainte de torsion à la virole tendant à faire tourner la virole radialement externe dans le sens antihoraire dans le sens d'écoulement des flux d'air. Ce mouvement de rotation fait également travailler les aubes de l'ensemble de l'art antérieur en flexion. En revanche, dans l'ensemble 28 de la présente invention, les aubes travaillent en compression.

Dans le second type représenté sur la figure 8, la turbomachine 30 est fixée à l'avion par sa virole radialement externe 34. Dès lors, en fonctionnement, la rotation de la roue de soufflante 38 imprime, comme cela est représenté par la flèche en traits pleins sur la figure 8, une contrainte de torsion à la virole tendant à faire tourner la virole radialement interne dans le sens antihoraire lorsque l'on regarde dans le sens d'écoulement des flux d'air. Ce mouvement de rotation fait alors travailler les aubes de l'ensemble de l'art antérieur en flexion. En revanche, dans l'ensemble 28 de la présente invention, les aubes 36 travaillent en traction.

Les aubes 36 en composite sont inclinées par rapport aux rayons R de la virole radialement interne 32. Plus précisément, comme cela est illustré aux figures 9 à 11, la portion utile de chaque aube est décalée angulairement par rapport à un rayon R de la virole radialement interne 32 passant par la fixation 54 entre l'aube 36 concernée et la virole radialement interne 32.

L'on trace une droite (référence « d » aux figures 9 à 11) passant par la jonction entre lesdites première et seconde portions d'extrémité 44, 46 et la partie utile 48 de l'aube 36, cette droite formant avec le rayon R de la virole radialement interne, passant par la jonction entre la première portion d'extrémité 44 et la partie utile 48 de ladite aube 36, un angle α tel que 0< α≤30°.

Dans la première forme de réalisation, illustrée à la figure 4, les aubes 36 sont inclinées d'un angle α de 10°.

Dans les deuxième et troisième formes de réalisation, illustrées aux figures 5 et 6, les aubes 36 sont inclinées d'un angle α de 30°.

La formation d'un angle α entre la partie utile 48 de l'aube 36 et le rayon R de la virole radialement interne 32, permet de réduire la création de tourbillons de coin entre la face intrados 50 de l'aube 36 et la face extrados 52 d'une aube 36 immédiatement adjacente, au niveau de la virole interne32. Il en résulte alors un meilleur écoulement du flux d'air et, ainsi, un meilleur rendement de la turbomachine 30.

En outre, cet angle α permet aussi d'augmenter la durée de vie des aubes 36 par rapport aux aubes de l'art antérieur puisque les aubes 36 en composite offrent une meilleure résistance à la traction et à la compression lorsqu'elles sont inclinées par rapport aux rayons R de la virole interne 32 sur laquelle elles sont fixées.
Les tableaux ci-dessous donnent des exemples de réalisation d'un ensemble de redressement en fonction du diamètre de la virole radialement interne 32 et du diamètre de la virole radialement externe 34. Pour chaque diamètre de la virole radialement interne 32, on peut associer différentes valeurs pour le nombre d'aubes d'une part, et pour la valeur de l'angle α d'autre part. La différence de diamètre indiquée dans le tableau ci-dessous est mesurée entre la face radialement externe de la virole interne et la face radialement interne de la virole externe, par exemple au niveau axial à moitié de la corde des aubes 36.

| Distance radiale disponible pour le montage d'aubes entre les viroles interne et externe | Alpha (en degrés) | Nombre d'aubes |
|---|---|---|
| 200 | Entre 20 et 30 | Entre 25 et 40 |
| 200 | Entre 0 et 20 | Entre 25 et 45 |
| 900 | Entre 20 et 30 | Entre 25 et 35 |
| 900 | Entre 10 et 20 | Entre 25 et 40 |
| 900 | Entre 0 et 10 | Entre 25 et 45 |

| Diamètre de la virole radialement interne (mm) | Diamètre de la virole radialement interne (mm) | Ecart au rayon | Nombre d'aubes | Angle α (°) |
|---|---|---|---|---|
| 1000 | 2000 | 500 | 25 | 30 |
| 1000 | 2800 | 900 | 25 | 30 |
| 1000 | 2800 | 900 | 30 | 20 |
| 1000 | 2000 | 500 | 36 | 10 |
| 1000 | 2400 | 700 | 40 | 15 |
| 1000 | 2800 | 900 | 45 | 10 |
| 1100 | 2300 | 600 | 30 | 30 |
| 1200 | 2000 | 400 | 36 | 20 |
| 1300 | 2300 | 500 | 36 | 20 |
| 1400 | 2600 | 600 | 45 | 10 |
| 1600 | 2800 | 600 | 45 | 15 |

D'après ce tableau, on comprend donc que, pour une virole radialement interne 32 ayant un diamètre déterminé, en tenant compte de la dimension de la virole externe et du dimensionnement en tenue mécanique des aubes, le nombre d'aubes peut évoluer et l'angle α peut être tel que 0° ≤ α ≤ 30°, par exemple au moins 3 degrés. Les figures 9 à 11 mettent également en lumière différents modes fixation des aubes aux viroles radialement interne 32 et externe 34. Plus spécifiquement, pour un angle α donné, plus la différence de rayon entre la virole interne et la virole externe est grande, moins il est possible géométriquement de mettre des aubes. Pour une valeur donnée de différence de rayon, en diminuant l'angle, il est possible d'augmenter le nombre d'aubes. Le paramètre de diamètre de virole radialement interne 32 entre en ligne de compte pour les valeurs les plus grandes d'angle et de nombre d'aubes.

Dans une première forme de réalisation illustrée sur la figure 9, la première portion d'extrémité 44 et la deuxième portion d'extrémité 46 servant à la fixation de l'aube 36 sur la virole radialement interne 32 et la virole radialement externe 34, respectivement, peuvent présenter une courbure permettant d'assurer le respect de l'angle α.

Ainsi, l'une au moins des portions d'extrémité 44, 46 peut être recourbée dans un premier sens en direction circonférentielle par rapport à la partie utile 48 de l'aube 36. Ledit premier sens circonférentiel est avantageusement orienté vers la face extrados 52 d'une aube 36 adjacente.

Toutefois, chaque portion d'extrémité 44, 46 peut également être recourbée dans un second sens circonférentiel vers la face intrados 50 d'une aube 36 adjacente.

Sur la figure 9, la première portion d'extrémité 44 est recourbée dans le second sens et la seconde portion d'extrémité 46 est recourbée dans le premier sens.

La deuxième forme de réalisation illustrée à la figure 10, qui est une forme de réalisation de l'invention, diffère de la première forme de réalisation en ce que la première portion d'extrémité 44 de l'aube 36 est rectiligne et est sensiblement dans le prolongement de la partir utile 48 de l'aube 36.

Pour permettre la fixation de la première portion d'extrémité 44, la virole radialement interne 32 comporte des décrochés 56 formant des parois s'étendant radialement et contre lesquelles la première partie 44 des aubes 36 vient s'appuyer.

La troisième forme de réalisation, qui est une forme de réalisation de l'invention, illustrée à la figure 11 diffère de la première forme de réalisation en ce que la seconde portion d'extrémité 46 de l'aube 36 est scindée en deux bandes de liaison, aussi appelées déliaisons. Une première bande de liaison est recourbée dans le premier sens circonférentiel, c'est-à-dire en direction circonférentielle par rapport à la partie utile de l'aube 36 vers la face extrados 52 d'une aube 36 adjacente, et une seconde bande de liaison est courbée dans un second sens circonférentiel opposé au premier sens circonférentiel.

Les formes de réalisation de la fixation des aubes 36 sur les viroles 32, 34 permettent notamment de simplifier les aubes 36 de la présente invention par rapport aux aubes de l'art antérieur. En effet, il n'est plus nécessaire de pourvoir les pieds et les sommets d'aubes de pâtes de fixation de l'aube aux viroles, qui forment avec la partie utile de l'aube un angle sensiblement droit et donc une zone fortement soumise aux contraintes mécaniques.

Avantageusement, la fixation des aubes sur les viroles radialement interne et externe est réalisée par boulonnage 54 des portions d'extrémité 44, 46, et des bandes de liaison le cas échéant, sur lesdites viroles radialement interne 32 et externe 34.

Ce mode de fixation offre l'avantage d'une bonne résistance mécanique face aux efforts subis par l'aube 36, et permet un montage et un démontage rapides en vue de faciliter et accélérer les opérations de maintenance.

L'ensemble de redressement 28 de flux d'air et la turbomachine 30 qui viennent d'être décrits présentent de nombreux avantages parmi lesquels :
- une meilleure tenue mécanique des aubes 36 ;
- un meilleur rendement aérodynamique ;
- un gain de masse et un plus faible impact environnemental, et
- un coût de fabrication réduit et une maintenance aisée.

La bonne tenue mécanique des aubes 36 est assurée grâce au positionnement des aubes 36, notamment de l'angle α, qui permet de faire travailler les aubes 36 en traction ou en compression en fonction du type de fixation de la turbomachine 30. Contrairement aux aubes de l'art antérieur qui travaillent essentiellement en flexion, les aubes 36 du présent ensemble de redressement 28 ont une plus grande durée de vie et une plus grande résistance à la fatigue.

Le rendement aérodynamique est amélioré, par rapport à l'art antérieur, par le positionnement des aubes 36, notamment grâce à l'angle α, qui permet d'agrandir la face extrados 52 des aubes 36 et donc la partie utile 48 des aubes 36. De plus, la présence de l'angle α permet de réduire les effets de tourbillons de coin en pied des aubes 36. Il en résulte alors un écoulement plus laminaire du flux d'air, ce qui augmente les performances de la turbomachine 30.

Les performances de la turbomachine 30 sont également augmentées par la réduction de masse et, de fait, la réduction de la consommation. En effet, la suppression des bras structurants de l'art antérieur entraîne, de facto, la réduction de la masse de la turbomachine 30, et, par voie de conséquence, réduit sa consommation d'énergie, de sorte que la turbomachine 30 a un impact environnemental plus faible. En outre, l'utilisation des matériaux composites, par rapport à l'utilisation de matériaux métalliques, réduit également la masse de la turbomachine 30.

Enfin, les coûts de fabrication et de maintenance sont également réduits, notamment par la fixation rapide (par boulonnage) des aubes 36 sur les viroles radialement interne 32 et externe 34 qui favorise la rapidité d'intervention des techniciens de maintenance. Par ailleurs, le travail en traction ou en compression des aubes 36 réduit également la détérioration des aubes 36 ce qui réduit la fréquence des périodes de maintenance préventives et/ou curatives.

## Revendications

1. Turbomachine (30) à double flux comprenant une roue de soufflante (38) agencée à l'extrémité amont de la turbomachine (30) et un ensemble de redressement (28) positionné axialement en aval de la roue de soufflante (38), ledit ensemble (28) comprenant deux viroles (32, 34) coaxiales radialement interne et externe entre lesquelles s'étendent des aubes (36) en matériau composite, la virole radialement interne (32) étant agencée autour d'un compresseur et délimitant avec la virole radialement externe (34) une veine annulaire d'écoulement d'un flux d'air secondaire, les aubes (36) étant fixées à une première portion d'extrémité (44) à la virole radialement interne (32) et à une seconde portion d'extrémité (46) à la virole radialement externe (34), les aubes (36) comprenant en outre une partie utile (48) s'étendant entre lesdites première et seconde portions d'extrémité (44, 46), **caractérisée en ce que** :
a) pour chaque aube (36), dans un plan perpendiculaire à l'axe des viroles (32, 34) radialement interne et externe, une droite (d) passant par une jonction entre lesdites première et seconde portions d'extrémité (44, 46) et la partie utile (48) forme avec un rayon (R) de la virole radialement interne (32) passant par la jonction entre ladite première portion d'extrémité (44) et la partie (46) utile de ladite aube (36) un angle α tel que 0°<α≤30°,
b) la différence de rayon entre la virole interne (32) et la virole externe (34) est comprise entre 200 et 900 mm,
et **en ce que** la virole radialement interne (32) comprend, sur sa périphérie radialement externe, des décrochés (56) formant des parois s'étendant radialement et contre lesquelles la première portion d'extrémité (44) des aubes (36) vient s'appuyer.

2. Turbomachine selon la revendication 1, dans laquelle le nombre d'aubes (36) est compris entre vingt-cinq et quarante-cinq

3. Turbomachine selon la revendication 1 ou 2, dans laquelle la virole radialement interne (32) présente un diamètre compris entre 1000 mm et 1600 mm.

4. Turbomachine selon la revendication 3, dans laquelle l'angle α est compris entre 10 et 30 degrés.

5. Turbomachine (30) selon la revendication 3 ou 4, dans laquelle le diamètre de la virole interne (32) est compris entre 1000 mm et 1200mm et le nombre d'aubes (36) est compris entre 30 et 40.

6. Turbomachine (30) selon l'une des revendications 1 à 5, dans laquelle le diamètre de la virole radialement interne (32) est de 1000 mm, l'angle α est de 10° et l'ensemble comprend 45 aubes (36).

7. Turbomachine (30) selon l'une des revendications 1 à 6, dans laquelle le diamètre de la virole radialement interne (32) est de 1100 mm, l'angle α est de 30° et l'ensemble comprend 30 aubes (36).

8. Turbomachine (30) selon l'une des revendications 1 à 7, dans laquelle le diamètre de la virole radialement interne (32) est de 1200 mm, l'angle α est de 20° et l'ensemble comprend 36 aubes (36).

9. Turbomachine (30) selon l'une des revendications 1 à 8, dans laquelle la veine secondaire est dépourvue de bras structurant en amont de l'ensemble de redressement (28).

10. Turbomachine (30) selon l'une des revendications 1 à 9, dans laquelle au moins l'une parmi la première portion d'extrémité (44) ou la seconde portion d'extrémité (46) est recourbée dans un premier sens en direction circonférentielle par rapport à la partie utile de l'aube.

11. Turbomachine (30) selon l'une des revendications 1 à 10, dans laquelle la première portion d'extrémité (44) ou la seconde portion d'extrémité (46) est recourbée dans un premier sens en direction circonférentielle par rapport à la partie utile (48) de l'aube (36), et l'autre de la seconde portion d'extrémité (46) ou de la première portion d'extrémité (44) est recourbée dans un second sens opposé au premier sens.

12. Turbomachine (30) selon la revendication 10 ou la revendication 11, dans laquelle ledit premier sens circonférentiel est orienté vers une face extrados (52) d'une aube (36) adjacente.

13. Turbomachine (30) selon la revendication 10, dans laquelle la seconde portion d'extrémité (46) comprend une première bande de liaison à la virole radialement externe (34) recourbée dans le premier sens en direction circonférentielle par rapport à la partie utile (48) de l'aube (36) et une seconde bande de liaison à la virole radialement externe (34) recourbée dans un second sens circonférentiel opposé au premier sens circonférentiel.

14. Turbomachine (30) selon l'une des revendications 1 à 9, dans laquelle la première portion d'extrémité (44) est sensiblement rectiligne et s'étend sensiblement dans le prolongement de la partie utile (48) de l'aube (36).

15. Turbomachine (30) selon la revendication 1 ou 2 ou selon la revendication 4 dépendant directement de la revendication 1 ou 2 ou selon l'une quelconque des revendications 9 à 14 dépendant directement soit de la revendication 1 ou 2, soit de de la revendication 4 dépendant directement de la revendication 1 ou 2, dans laquelle, la virole externe présente un diamètre de de 2000 à 2800 mm.

## Patentansprüche

1. Mantelstromturbotriebwerk (30) mit einem am stromaufwärtigen Ende des Turbotriebwerks (30) angeordneten Gebläserad (38) und einer axial stromabwärts des Gebläserads (38) positionierten Gleichrichtungsanordnung (28), wobei diese Anordnung (28) zwei koaxiale Mantelringe (32, 34), nämlich einen radial inneren und einen radial äußeren, enthält, zwischen denen sich Schaufeln (36) aus Verbundmaterial erstrecken, wobei der radial innere Mantelring (32) um einen Verdichter herum angeordnet ist und mit dem radial äußeren Mantelring (34) einen ringförmigen Strömungskanal für einen Sekundärluftstrom begrenzt, wobei die Schaufeln (36) mit einem ersten Endabschnitt (44) an dem radial inneren Mantelring (32) und mit einem zweiten Endabschnitt (46) an dem radial äußeren Mantelring (34) befestigt sind, wobei die Schaufeln (36) ferner ein Nutzteil (48) enthalten, das sich zwischen dem ersten und dem zweiten Endabschnitt (44, 46) erstreckt, umfassend dass:
a) für jede Schaufel (36) in einer Ebene senkrecht zur Achse des radial inneren und radial äußeren Mantelrings (32, 34) eine Gerade (d), die durch eine Verbindung zwischen dem ersten und dem zweiten Endabschnitt (44, 46) und dem Nutzteil (48) verläuft, mit einem Radius (R) des radial inneren Mantelrings (32), der durch die Verbindung zwischen dem ersten Endabschnitt (44) und dem Nutzteil (46) der Schaufel (36) verläuft, einen Winkel α einschließt, so dass 0° < α ≤ 30°,
b) die Radiusdifferenz zwischen dem inneren Mantelring (32) und dem äußeren Mantelring (34) zwischen 200 und 900 mm beträgt,
**dadurch gekennzeichnet, dass**
der radial innere Mantelring (32) an seinem radial äußeren Umfang Absätze (56) aufweist, die Wandungen bilden, welche sich radial erstrecken und an welchen sich der erste Abschnitt der Schaufeln (36) abstützt.

2. Turbotriebwerk nach Anspruch 1,
wobei die Anzahl der Schaufeln (36) zwischen fünfundzwanzig und fünfundvierzig beträgt.

3. Turbotriebwerk nach Anspruch 1 oder 2,
wobei der radial innere Mantelring (32) einen Durchmesser zwischen 1000 mm und 1600 mm aufweist.

4. Turbotriebwerk nach Anspruch 3,
wobei der Winkel α zwischen 10 und 30 Grad beträgt.

5. Turbotriebwerk (30) nach Anspruch 3 oder 4,
wobei der Durchmesser des inneren Mantelrings (32) zwischen 1000 mm und 1200 mm beträgt und die Anzahl der Schaufeln (36) zwischen 30 und 40 beträgt.

6. Turbotriebwerk (30) nach einem der Ansprüche 1 bis 5,
wobei der Durchmesser des radial inneren Mantelrings (32) 1000 mm beträgt, der Winkel α 10° beträgt und die Anordnung 45 Schaufeln (36) enthält.

7. Turbotriebwerk (30) nach einem der Ansprüche 1 bis 6,
wobei der Durchmesser des radial inneren Mantelrings (32) 1100 mm beträgt, der Winkel α 30° beträgt und die Anordnung 30 Schaufeln (36) enthält.

8. Turbotriebwerk (30) nach einem der Ansprüche 1 bis 7,
wobei der Durchmesser des radial inneren Mantelrings (32) 1200 mm beträgt, der Winkel α 20° beträgt und die Anordnung 36 Schaufeln (36) enthält.

9. Turbotriebwerk (30) nach einem der Ansprüche 1 bis 8,
wobei der Sekundärströmungskanal keinen Strukturarm stromaufwärts der Gleichrichtungsanordnung (28) aufweist.

10. Turbotriebwerk (30) nach einem der Ansprüche 1 bis 9,
wobei zumindest einer aus erstem Endabschnitt (44) bzw. zweitem Endabschnitt (46) in einer ersten Richtung in Umfangsrichtung relativ zum Nutzteil der Schaufel gekrümmt ist.

11. Turbotriebwerk (30) nach einem der Ansprüche 1 bis 10,
wobei der erste Endabschnitt (44) bzw. der zweite Endabschnitt (46) in einer ersten Richtung in Umfangsrichtung relativ zum Nutzteil (48) der Schaufel (36) gekrümmt ist und der andere aus zweitem Endabschnitt (46) bzw. erstem Endabschnitt (44) in einer zweiten Richtung entgegengesetzt zur ersten Richtung gekrümmt ist.

12. Turbotriebwerk (30) nach Anspruch 10 oder 11,
wobei die erste Umfangsrichtung auf eine Saugseite (52) einer angrenzenden Schaufel (36) gerichtet ist.

13. Turbotriebwerk (30) nach Anspruch 10,
wobei der zweite Endabschnitt (46) ein erstes Verbindungsband (34) zur Verbindung mit dem radial äußeren Mantelring (34) aufweist, das in der ersten Richtung in Umfangsrichtung relativ zum Nutzteil (48) der Schaufel (36) gekrümmt ist, sowie ein zweites Verbindungsband (34) zur Verbindung mit dem radial äußeren Mantelring (34), das in einer zweiten Umfangsrichtung entgegengesetzt zur ersten Umfangsrichtung gekrümmt ist.

14. Turbotriebwerk (30) nach einem der Ansprüche 1 bis 9,
wobei der erste Endabschnitt (44) im Wesentlichen geradlinig ist und sich im Wesentlichen in Verlängerung des Nutzteils (48) der Schaufel (36) erstreckt.

15. Turbotriebwerk (30) nach Anspruch 1 oder 2 oder nach Anspruch 4, der direkt von Anspruch 1 oder 2 abhängt, oder nach einem der Ansprüche 9 bis 14, der entweder direkt von Anspruch 1 oder 2 oder von Anspruch 4 abhängt, der direkt von Anspruch 1 oder 2 abhängt, wobei der äußere Mantelring einen Durchmesser von 2000 bis 2800 mm aufweist.

## Claims

1. A dual-flow turbine engine (30) comprising a fan wheel (38) arranged at an upstream end of the turbine engine (30) and a straightening assembly (28) positioned axially downstream of the fan wheel (38), said assembly (28) comprising two radially inner and outer coaxial shells (32, 34) between which extend vanes (36) made of composite material, the radially inner shell (32) being arranged around a compressor and delimiting with the radially outer shell (34) an annular stream for the flow of a secondary air flow, the vanes (36) being fastened at a first end portion (44) on the radially inner shell (32) and at a second end portion (46) on the radially outer shell (34), the vanes (36) further comprising a useful part (48) extending between said first and second end portions (44, 46), **characterized in that**:
a) for each vane (36), in a plane perpendicular to the axis of the radially inner and outer shells (32, 34), a straight line (d) passing through a junction between said first and second end portions (44, 46) and the useful part (48) forms an angle α with a radius (R) of the radially inner shell (32) passing through the junction between said first end portion (44) and the useful part (46) of said vane (36) such that 0° < α ≤ 30°,
b) the difference in radius between the inner (32) and outer (34) shells ranges from 200 to 900 mm,
and **in that** the radially inner shell (32) comprises, on its radially outer periphery, breaks (56) forming walls that extend radially and against which the first end portion (44) of the vanes (36) comes to rest.

2. The turbine engine according to claim 1, wherein the number of vanes (36) ranges from twenty-five to forty-five.

3. The turbine engine according to claim 1 or 2, wherein the radially inner shell (32) has a diameter ranging from 1,000 mm to 1,600 mm.

4. The turbine engine according to claim 3, wherein the angle α ranges from 10 to 30 degrees.

5. The turbine engine (30) according to claim 3 or 4, wherein the diameter of the inner shell (32) ranges from 1,000 mm to 1,200 mm and the number of vanes (36) ranges from 30 to 40.

6. The turbine engine (30) according to one of claims 1 to 5, wherein the diameter of the radially inner shell (32) is 1,000 mm, the angle α is 10° and the assembly comprises 45 vanes (36).

7. The turbine engine (30) according to one of claims 1 to 6, wherein the diameter of the radially inner shell (32) is 1,100 mm, the angle α is 30° and the assembly comprises 30 vanes (36).

8. The turbine engine (30) according to one of claims 1 to 7, wherein the diameter of the radially inner shell (32) is 1,200 mm, the angle α is 20° and the assembly comprises 36 vanes (36).

9. The turbine engine (30) according to one of claims 1 to 8, wherein the secondary stream lacks a structural arm upstream of the straightening assembly (28).

10. The turbine engine (30) according to one of claims 1 to 9, wherein at least one among the first end portion (44) and the second end portion (46) is curved in a first direction that is circumferential with respect to the useful part of the vane.

11. The turbine engine (30) according to one of claims 1 to 10, wherein the first end portion (44) or the second end portion (46) is curved in a first direction that is circumferential with respect to the useful part (48) of the vane (36), and the other of the second end portion (46) or the first end portion (44) is curved in a second direction that is opposite to the first direction.

12. The turbine engine (30) according to claim 10 or 11, wherein said first circumferential direction is directed towards a suction surface (52) of an adjacent vane (36).

13. The turbine engine (30) according to claim 10, wherein the second end portion (46) comprises a first strip for bonding to the radially outer shell (34) curved in the first circumferential direction with respect to the useful part (48) of the vane (36) and a second strip for bonding to the radially outer shell (34) curved in a second circumferential direction that is opposite to the first circumferential direction.

14. The turbine engine (30) according to one of claims 1 to 9, wherein the first end portion (44) is substantially straight and extends substantially in line with the useful part (48) of the vane (36).

15. The turbine engine (30) according to claim 1 or 2 or according to claim 4 directly dependent on claim 1 or 2 or according to any of claims 9 to 16 directly dependent either on claim 1 or 2 or on claim 4 directly dependent on claim 1 or 2, wherein the outer shell has a diameter from 2,000 to 2,800 mm.
